# EUROPÄISCHE PATENTANMELDUNG

(11) **EP 0 581 063 A1**
(43) Veröffentlichungstag der Anmeldung: **02.02.1994**
(21) Anmeldenummer: 93110782.5
(22) Anmeldetag: 06.07.1993
(51) Int. Cl.: H04Q 9/00

(54) **Verfahren zum Aufruf von Stationen anhand des Inhalts eines Adressenspeichers und Anordnung zur Durchführung des Verfahrens**

(30) Priorität: 27.07.1992 DE 4224791
(71) Anmelder: SIEMENS AKTIENGESELLSCHAFT, D-80333 München (DE)
(72) Erfinder: Müller, Karl, D-82515 Wolfratshausen-Waldram (DE); Rozek, Harald-Roger, D-12349 Berlin (DE)

(57) **Zusammenfassung**

Verfahren zum Aufruf von Stationen durch eine Zentralstation anhand des Inhalts eines Adressenspeichers (110) und Anordnung zur Durchführung des Verfahrens. Um mit einer möglichst geringen Antwortwartezeit zwischen den Aufruftelegrammen auszukommen, ohne Kollisionen in Kauf zu nehmen, werden im Adressenspeicher adressenindividuelle Antwortwartezeiten gespeichert. Bei Nichtantworten einer Station wird der nächste Aufruf nach Ablauf der zur betreffenden Adresse gespeicherten Antwortwartezeit ausgesendet. Die Antwortwartezeiten können durch Messung gewonnen oder aus der Netzstruktur ermittelt werden. Das Verfahren läßt sich vorteilhaft zur Überwachung von Übertragungseinrichtungen der elektrischen und/oder optischen Nachrichtenübertragungstechnik verwenden.

## Beschreibung

Die Erfindung bezieht sich auf ein Verfahren zum Aufruf von Stationen anhand des Inhalts eines Adressenspeichers und auf eine Anordnung zur Durchführung des Verfahrens.

Eine derartiges Verfahren ist bereits aus der DE-30 36 923 C2 bekannt. Das bekannte Verfahren bezieht sich auf eine Station für Signalübertragungseinrichtungen, die nach dem Aufruf- und Anreizverfahren arbeiten und bei denen in den Stationen jeweils wenigstens einer Gruppe von Eingabeeinrichtungen eine gemeinsame Einspringberechtigungszeit zugeteilt ist. Dabei lassen sich die Adressen der in den Stationen vorhandenen Eingabeeinrichtungen in einen Arbeitsspeicher einschreiben und bei einer anreizbedingten Sendung zwecks gezielter Abfrage der Eingabeeinrichtungen auslesen. Zur laufenden Aktualisierung des Adressenspeicherinhalts ist vorgesehen, daß mittels einer Adressenabfrageeinrichtung in zeitlicher Folge eine wiederholte Abfrage der Eingabeeinrichtungen vorgenommen und in den Adressenspeicher jeweils das letzte Abfrageergebnis eingeschrieben wird.

Da bei der bekannten Signalübertragungseinrichtung nur vorhandene Eingabeeinrichtungen zur Abgabe von Meldungen aufgerufen werden, ergibt sich eine besonders geringe Zykluszeit. Die Zeitersparnis ist jedoch dadurch begrenzt, daß zur Aktualisierung des Adressenspeichers jeweils alle Stationen abgefragt werden müssen.

Ferner ist aus der DE AS 23 39 392 bereits ein Verfahren zum Aufrufen von Außenstationen durch eine Zentralstation in Fernmeldeanlagen bekannt, in denen alle Außenstationen über einen allen Stationen gemeinsamen Übertragungsweg einzeln aufrufbar und mit der Zentralstation verbunden sind. Dabei ist die Zentralstation mit den Außenstellen über einen Voll-Duplex-Kanal in der Weise verbunden, daß die Außenstellen nur dann eine Nachricht an die Zentralstation absetzen können, wenn sie durch Aufruf von der Zentralstation dazu aufgefordert worden sind. Um die Antwortwartezeit zwischen den Aufrufsignalen zu verringern, sieht das bekannte Verfahren einen Schnellaufruf mit der Möglichkeit von Kollisionen in Verbindung mit einem langsamen Aufruf mit ausreichend großen Antwortwartezeit vor.

Aufgabe der Erfindung ist es, mit einer möglichst geringen Antwortwartezeit zwischen den Aufruftelegrammen auszukommen, ohne daß die Möglichkeit von Kollisionen in Betracht gezogen wird.

Gemäß der Erfindung wird diese Aufgabe in der im kennzeichnenden Teil des Patentanspruchs 1 angegebenen Weise gelöst. Dabei werden in einer Aufrufliste zusätzlich zu den Adressen jeweils adressenindividuelle Wartezeichen gespeichert.

Die zu speichernden Antwortwartezeiten werden zweckmäßigerweise in der im kennzeichnenden Teil des Patentanspruchs 2 angegebenen Weise ermittelt.

Für den Fall, daß der Signalübertragungsweg aus einem verzweigten Signalübertragungsnetz mit mehreren in Kette geschalteten Netzelementen besteht, ist es zweckmäßig, die stationsindividuellen Antwortwartezeiten in der in Anspruch 3 angegebenen Weise zu ermitteln.

Dabei kann, falls die Netzstruktur in der Zentralstation bekannt ist, die jeweilige Zahl der Kaskadierungen aus dieser Netzstruktur abgeleitet werden.

Die Weiterbildung des Verfahrens nach Anspruch 4 ist dann von Vorteil, wenn die Netzstruktur in der Zentrale noch nicht bekannt ist.

Nach Anspruch 5 werden in Sekundärmastern zweckmäßigerweise stationsindividuelle Speicherwartezeiten gespeichert. Alternativ kann die Abspeicherung des Fehlerkriteriums bei Empfang eines neuen Aufruftelegrammes erfolgen.

Eine zweckmäßige Anordnung zur Durchführung des Verfahrens geht aus Anspruch 6 hervor.

Die Erfindung wird anhand der in den Figuren 1 bis 3 gezeigten Ausführungsbeispiele näher erläutert.

Es zeigen
- Fig. 1: eine Signalübertragungseinrichtung mit Zentralstation und Stationen,
- Fig. 2: einen Stromlauf einer Zentralstation und
- Fig. 3: eine Überwachungsvorrichtung mit durch eine Zentralstation aufrufbaren Prozessoreinheiten.

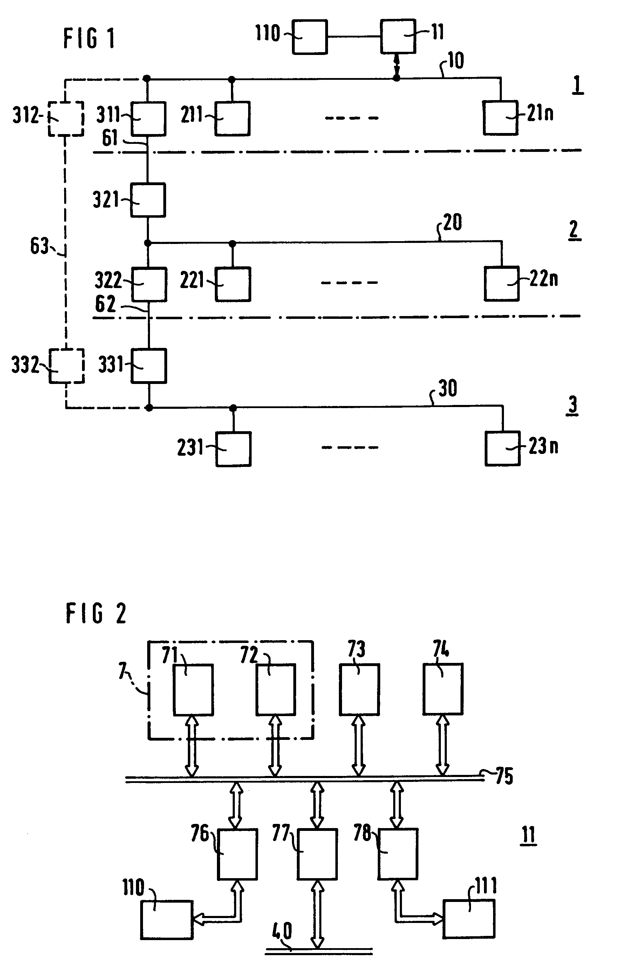

Fig. 1 zeigt einen Ausschnitt aus einer Signalübertragungseinrichtung, bei der die Zentralstation 11 mit einer Vielzahl von einzeln aufrufbaren Stationen Informationen austauscht. Die nach dem Aufruf- oder Pollingverfahren aufrufbaren Stationen sind in den voneinander entfernten Betriebsstellen 1 bis 3 angeordnet.

Die Stationen 211 ... 21n der Station 1 sind über den Datenbus 10 miteinander und mit der Zentralstation 11 verbunden. Die Stationen 221 ... 22n der Betriebsstelle 2 sind an den Datenbus 20, die Stationen 231 ... 23n der Station 3 an den Datenbus 30 angeschlossen.

Die Datenbusse 10 und 20 der Betriebsstellen 1 und 2 sind über eine Übertragungseinrichtung miteinander verbunden, die aus den Übertragungsgeräten 311 und 321 besteht. Der Datenbus 30 ist über die aus den Übertragungsgeräten 322 und 331 bestehende Übertragungseinrichtung mit dem Datenbus 20 verbunden.

Die Datenbusse 10, 20 und 30 sowie die Übertragungseinrichtungen 311, 321 und 322, 331 können für bidirektionale Signalübertragung im Halbduplexbetrieb ausgebildet sein. In diesem Fall liegen die Zentralstation 11 und die Stationen 211 ... 23n jeweils mit einem gemeinsamen Einund Ausgang am betreffenden Datenbus 10, 20 oder 30.

Andererseits können die Datenbusse 10, 20 und 30 jeweils als Vierdraht-Datenbus für Vollduplexbetrieb ausgebildet sein. In diesem Fall sind die Zentralstation 11 und die Stationen 211 ... 23n jeweils über einen Ankoppler an den betreffenden Datenbus 10, 20 oder 30 angeschlossen, der jeweils eine rückflußfreie Kopplung von den drei Vierdraht-Übertragungskanälen schafft, die durch zwei Anschlußpaare für den Datenbus und ein Anschlußpaar für die Zentralstation oder die Station bestehen. Ein derartiger Ankoppler ist z.B. aus der DE-PS 20 48 140 bekannt.

Bei der Signalübertragungseinrichtung nach Fig. 1 ist der Datenbus 30 über zwei in Kette geschaltete Übertragungseinrichtungen mit dem Datenbus 10 verbunden. Ersetzt man die Übertragungseinrichtung 331, 322 durch die strichliert dargestellte Übertragungseinrichtung 312, 332, so verringert sich die Zahl der Übertragungsgeräte, über die die Betriebsstelle 3 von der Zentralstation 11 zu erreichen ist. Möglicherweise ist der Weg über den Übertragungskanal 63 kürzer als der über die Kettenschaltung der Übertragungskanäle 61 und 62.

Fig. 2 zeigt für die Signalübertragungseinrichtung nach Fig. 1 einen Stromlauf der Zentralstation.

Die Zentralstation 11 enthält die Vorrichtung 7 zur Ablaufsteuerung, die aus dem Prozessor 71 und dem Programmspeicher 72 besteht. An dem internen Prozessorbus 75 liegen der Prozessor 71, der Programmspeicher 72, der Adressenspeicher 73 und der Datenspeicher 74.

Das Datensichtgerät 110, das insbesondere ein PC ist, ist über den seriellen Ein-/Ausgabe-Port 76 an den internen Prozessorbus 75 angeschlossen. Zwischen dem internen Prozessorbus 75 und dem Datenbus 40 der Überwachungsvorrichtung nach Fig. 1 liegt der serielle Ein-/Ausgabe-Port 77. Die Signalisierungseinrichtung 111, die zur optischen und/oder akustischen Ausgabe von Meldungen und/oder Alarmen dient, ist über den parallelen Ein-/Ausgabe-Port 78 mit dem internen Prozessorbus 75 verbunden.

In einem weitverzweigten Übertragungsnetz können die Laufzeiten der Telegramme von und zu den einzelnen Stationen sehr unterschiedlich sein. Legt man jeweils die in der Signalübertragungseinrichtung maximal mögliche Laufzeit eines Aufruf- und dazugehörigen Antworttelegrammes für die Antwortwartezeit zugrunde, nach der bei Nichtantworten einer Station die nächste Station aufgerufen wird, so kann sich eine unangenehm große Zykluszeit ergeben.

Die Stationen 211 ... 23n sind durch die Zentralstation 11 derart abfragbar, daß als Abfrageergebnis die Adressen der in der Signalübertragungseinrichtung vorhandenen Stationen 211 ... 23n in den Adressenspeicher 110 eingeschrieben werden. In den Abfragezyklen durch die Zentralstation 11 werden nur die im Adressenspeicher 110 gespeicherten Adressen zur Abfrage der Stationen 211 ... 23n herangezogen.

Bei der Signalübertragungseinrichtung nach den Figuren 1 und 2 werden die Stationen daher durch die Zentralstation 11 anhand des Inhalts des Adressenspeichers 110 gezielt aufgerufen. Der Aufrufzyklus erfaßt somit jeweils gezielt nur die im Netz vorhandenen oder betriebsbereiten Stationen, so daß der Aufrufzyklus nicht unnötig verlängert wird.

Allerdings müßte nach jedem Aufruf die Zentralstation auf das Antworttelegramm der adressierten Station warten. Antwortet diese aufgrund von Übertragungsfehlern oder Netzunterbrechungen nicht, müßte die Zentralstation die maximal mögliche Laufzeit des Aufruf- und des Antworttelegramms abwarten, bis sie diese Station mit einer Fehlerkennung registriert, evtl. Alarme ausgibt und die nächste Station aufruft.

Die Signalübertragungseinrichtung nach den Figuren 1 und 2 arbeitet nach einem Verfahren, das demgegenüber zu einer wesentlichen Beschleunigung der Aufrufzyklen führt.

Im Adressenspeicher 110 sind zu den Adressen der Stationen 211 ... 23n individuelle Antwortwartezeiten gespeichert. Je Aufrufzyklus werden auf das erste Aufruftelegramm folgende weitere Aufruftelegramme jeweils bei Nichtantworten der zuvor aufgerufenen Station nach Ablauf der zur Adresse dieser Station gespeicherten Antwortwartezeit ausgesendet.

Die Zentralstation 11 ruft in einem Prüfzyklus die Stationen 211 ... 23n einzeln auf, wartet die in der Signalübertragungseinrichtung maximal vorkommende Anwortzeit bis zum Aussenden des nächsten Aufruftelegrammes ab, mißt jeweils die Zeit zwischen dem Aussenden des Aufruftelegramms und Empfangen des Antworttelegrammes und speichert die gemessene Zeit im Adressenspeicher als Antwortwartezeit zur betreffenden Adresse.

Bei dem automatischen Aufbau der Aufrufliste bei Inbetriebnahme der Signalübertragungseeinrichtung wird die maximale Antwortzeit bis zum nächsten Aufruf von der Zentralstation abgewartet. Von der Zentralstation wird dabei die Zeit zwischen dem Aussenden des Aufruftelegramms und dem Empfangen des Antworttelegramms einer vorhandenen Station gemessen. Die so ermittelte Zeit wird zusammen und mit der Adresse der Station in der Aufrufliste gespeichert. Diese Zeit wird während des Betriebes dann als Antwortwartezeit bei Nichtantworten einer Station bis zum Aussenden des nächsten Aufrufs abgewartet. Dadurch bleibt die Gesamtzykluszeit annähernd konstant.

Bei darauffolgenden Aufrufzyklen werden auf das erste Aufruftelegramm folgende weitere Aufruftelegramme jeweils bei Nichtantworten der zuvor aufgerufenen Station bereits unmittelbar nach Ablauf der zur Adresse dieser Station gespeicherten Antwortwartezeit ausgesendet.

Die unterschiedlichen Antwortwartezeiten setzen sich aus mehreren Größen, insbesondere Telegrammaussendezeiten, Telegrammauswertezeiten, ggf. Fehlerkorrekturzeiten und Laufzeiten auf den Übertragungsstrecken zusammen. Der relative Anteil dieser Zeiten an der Gesamtzeit hängt unter anderem von der für die Übertragung vorgesehenen Bitrate und der Länge der Telegramme ab. Bei üblichen Bitraten von z.B. 64 kbit/s und Telegrammlängen von etwa 20 Byte ist die Antwortwartezeit im wesentlichen durch die Zeiten bestimmt, die jeweils zur Aussendung der Telegramme benötigt werden. Die Antwortwartezeit hängt daher im wesentlichen von der Zahl der auf dem Telegrammübertragungsweg im Übertragungsnetz in Kette geschalteten Übertragungseinrichtungen ab.

Eine vorteilhafte Alternative zur Messung und Speicherung der stationsindividuellen Antwortwartezeiten besteht daher darin, zu jeder Station die Zahl der Kaskadierungen zu speichern, die ein Aufruftelegramm auf seinem Weg von der Zentralstation zur jeweiligen Station durchläuft und als Antwortwartezeit das Produkt aus einer vorgegebenen Mindestzeit und der Anzahl der Kaskadierungen zu speichern.

Bei der in Fig. 1 gezeigten Überwachungsvorrichtung kann die Antwortwartezeit je nach Anzahl der im Netz kaskadierten Betriebsstellen bei Ausfall eines Netzabschnitts zu einer erheblichen Verlängerung eines Abfragezyklus der in der Aufrufliste gespeicherten Stationen führen, wenn stets die Laufzeit eines Telegramms von und zu der entferntesten Betriebsstelle über die maximale Anzahl von Kaskadierungen zugrundegelegt wird.

Da die Antwortzeit im wesentlichen von der Anzahl der kaskadierten Betriebsstellen abhängt, wird zweckmäßigerweise als reale Antwortzeit die Mindestzeit multipliziert mit der Anzahl der Kaskadierungen von der Zentralstation abgewartet.

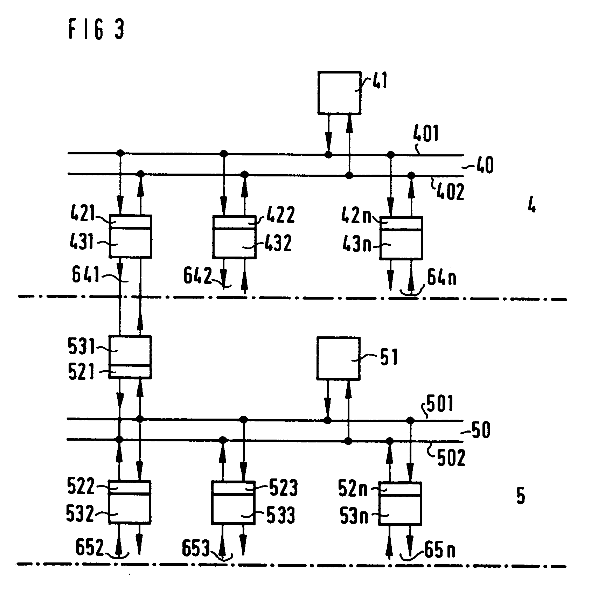

Fig. 3 zeigt eine Signalübertragungseinrichtung mit Zentralstation und Unterstationen, bei der die Zentralstation und die Stationen jeweils ohne Ankoppler an den Datenbus angeschlossen sind.

Fig. 3 zeigt einen Ausschnitt aus einem Nachrichtenübertragungsnetz, bei dem mehrere Betriebsstellen mit Hilfe von Nachrichtenübertragungseinrichtungen miteinander verbunden sind. Die Nachrichtenübertragungseinrichtung umfaßt die über ein Nachrichtenübertragungsnetz miteinander verbundenen Betriebsstellen 4 und 5. In den Betriebsstellen 4 und 5 sind Netzelemente vorgesehen, die insbesondere Leitungsendgeräte von digitalen optischen Übertragungseinrichtungen sind. Mit Hilfe dieser Übertragungseinrichtungen werden jeweils Nutzsignale von einer Betriebsstelle zur anderen übertragen. Die Übertragungseinrichtungen stellen jeweils zusätzlich zu den Nutzkanälen einen In-Betrieb-Überwachungskanal zur Verfügung. Die Netzelemente 431 ... 43n; 531 ... 53n sind daher durch ein Netz von In-Betrieb-Überwachungskanälen miteinander verbunden, das dieselbe Struktur hat, wie das zur Übertragung der Nutzsignale dienende Nachrichtenübertragungsnetz.

Die Netzelemente 431 ... 43n; 531 ... 53n enthalten jeweils eine Prozessoreinheit 421 ... 42n; 521 ... 52n, die als Überwachungseinrichtung dient. Zusätzliche Prozessoreinheiten 41, 51 ermöglichen eine Erfassung, Übermittlung und Speicherung von Überwachungs- und Steuerungsinformationen im In-Betrieb-Überwachungsnetz.

In der Betriebsstelle 4 tauscht die als Master ausgebildete Prozessoreinheit 41 mit den als Slaves ausgebildeten Prozessoreinheiten 421 ... 42n über den Datenbus 40 Informationen aus. Der Datenbus 40 besteht aus dem Sendebus 402 und dem Empfangsbus 401.

Der Master 41 liegt mit seinem Eingang an dem Sendebus 402 und mit seinem Ausgang an den Empfangsbus 401 und hat insbesondere eine RS485-Schnittstelle.

Die als Slaves ausgebildeten Prozessoreinheiten 421 ... 42n sind jeweils mit ihrem Datenausgang an die Sendebus 402 und mit ihrem Dateneingang an den Empfangsbus 401 angeschlossen.

Der Master 41 sendet Aufruftelegramme an die Slaves 421 ... 42n und empfängt von den Slaves Antworttelegramme. Außerdem gibt der Master 41 jeweils vom Sendebus 402 empfangene Telegramme an den Empfangsbus 401 weiter.

Die Datenbusse 40 und 50 der Betriebsstellen 4 und 5 sind mit Hilfe des Vollduplex-Übertragungskanals 641 miteinander verbunden. Die Übertragungskanäle 642 ... 64n; 652 ... 65n führen zu weiteren in Fig. 1 nicht dargestellten Betriebsstellen.

Nur in einer der Betriebsstellen ist eine als Master betriebene Prozessoreinheit vorhanden, nämlich der Primärmaster 41 in der Betriebsstelle 4.

Die Prozessoreinheiten 421 ... 42n der Netzelemente 431 ... 43n geben über den örtlichen Datenbus 40 eintreffende Telegramme über den an das jeweilige Netzelement 431 ... 43n angeschlossenen Übertragungskanal 641 ... 64n weiter. Außerdem geben die Netzelemente 431 ... 43n über einen Übertragungskanal 641 ... 64n empfangene Telegramme an den örtlichen Datenbus 40 weiter.

Entsprechendes gilt für die Netzelemente 531 ... 53n der Betriebsstelle 5, die an den örtlichen Datenbus 50 angeschlossen und mit den Übertragungskanälen 641 und 652 ... 65n verbunden sind.

In den weiteren Betriebsstellen ist jeweils eine Prozessoreinheit mit Spiegelungsfunktion vorhanden, die mit ihrem Eingang an den Sendebus und mit ihrem Ausgang an den Empfangsbus angeschlossen ist und vom Sendebus empfangene Telegramme an den Empfangsbus aussendet. In der Betriebsstelle 5 ist dies die Prozessoreinheit 51.

Die Prozessoreinheiten 421 ... 42n; 521 ... 52n lassen sich für eine Rückübertragung von über den zugehörigen Übertragungskanal 641 ... 64n; 641, 652 ... 65n empfangenen Telegrammen über denselben Übertragungskanal sperren.

Der Master 41 ist ein Primärmaster. Als Prozessoreinheit mit Spiegelungsfunktion dient der Sekundärmaster 51. Alle Prozessoreinheiten sind jeweils mit Adressen versehen. Von den durch den Master und die Sekundärmaster gebildeten Prozessoreinheiten ist jeweils eine als Primärmaster und die anderen als Sekundärmaster eingestellt.

In den Antworttelegrammen der als Sekundärmaster dienenden Prozessoreinheiten läßt sich eine Anfrage zur Übernahme der Primärmaster-Funktion übertragen. Der Primärmaster ist derart ausgebildet, daß er im nächsten Telegramm seine Primärmasterfunktion an den anfragenden Sekundärmaster abgeben und selbst in den Sekundärmaster-Betrieb übergehen kann.

Der Primärmaster läßt sich zweckmäßigerweise für eine Abgabe seiner Primärmasterfunktion sperren.

Von Vorteil ist eine selbsttätige Wiederaufnahme der Primärmaster-Funktion in dem Fall, daß die vom Primärmaster- in den Sekundärmaster-Betrieb übergegangene Prozessoreinheit innerhalb einer vorgegebenen Zeit weder Aufruf- noch Antworttelegramme empfängt.

Die Prozessoreinheiten 421 ... 42n der Netzelemente 431 ... 43n der Betriebsstelle 4 sind über den Vierdraht-Datenbus 40 miteinander und mit dem Primärmaster verbunden. Die Prozessoreinheiten 521 ... 52n der Netzelemente 531 ... 53n der Betriebsstelle 5 sind über den Vierdraht-Datenbus 50 mit dem Sekundärmaster 51 verbunden.

Jedes der Netzelemente 431 ... 43n bzw. 531 .... 53n ist über einen eigenen Übertragungskanal 641 ... 64n bzw. 652 ... 65n mit einem fernen Netzelement verbunden, wobei von den fernen Netzelementen in Fig. 1 lediglich das Netzelement 531 dargestellt ist. Das ferne Netzelement 531 ist seinerseits mit den Netzelementen 532 ... 53n der fernen Betriebsstelle 5 über den dortigen Datenbus 50 verbunden. Entsprechendes gilt für die weiteren Übertragungskanäle 642 ... 64n und 652 ... 65n. Dadurch sind die Datenbusse 40, 50, ... aller Betriebsstellen 4, 5, ... logisch miteinander verbunden.

Die Datenbusse 40 und 50 sind für Duplexbetrieb mit je einem Empfangs- und einem Sendebus 401, 402; 501, 502 ausgestattet, an der alle Prozessoreinheiten 421 ... 42n; 521 ... 52n gleichartig angeschlossen sind.

Die Prozessoreinheiten bilden jeweils eine Vorrichtung zur Ablaufsteuerung, die in den Netzelementen bzw. den Masterprozessoren für eine geordnete Verbreitung der Information im Netz sorgt.

Zur Weiterleitung eines über den Übertragungskanal eines Netzelements eintreffenden Telegramms ist folgende Telegrammführung durch die Prozessoreinheiten vorgesehen:
Aufruftelegramme gelangen
vom Primarmaster 41 an den Empfangsbus 401 der Betriebsstelle 4,
vom Empfangsbus 401 an alle Netzelemente 431 ... 43n der Betriebsstelle 4,
von allen Netzelementen 431 ... 43n der Betriebsstelle 4 an alle dazugehörigen Übertragungskanäle 641 ... 64n ,
z.B. vom Netzelement 431 über den Übertragungskanal 641 an Netzelement 531,
vom Netzelement 531 an den Sendebus 502 des Datenbusses 50 der Betriebsstelle 5,
vom Sendebus 502 an den Sekundärmaster 51,
vom Sekundärmaster 51 an den Empfangsbus 501 des Datenbusses 50 der Betriebsstelle 5,
vom Empfangsbus 501 des Datenbusses 50 an alle Netzelemente 531 ... 53n der Betriebssstelle 5,
von allen Netzelementen 532 ... 53n an den dazugehörigen Übertragungskanal 651 ... 65n, außer den vom Netzelement 531 und
von allen übrigen Übertragungskanälen zu weiteren Betriebsstellen
usw.

Auf diese Weise gelangt das Antworttelegramm an alle Prozessoreinheiten der Überwachungsvorrichtung. Die adressierte Prozessoreinheit antwortet mit einem Antworttelegramm. Dabei sendet sie das Antworttelegramm an den mit ihr verbundenen Datenbus und an den mit ihr verbundenen Übertragungskanal aus, so daß sich das Antworttelegramm in beiden Richtungen im Übertragungsnetz ausbreitet. Das Antworttelegramm gelangt z.B. auf dem folgenden Weg zum Primärmaster 41:
über den Übertragungskanal 652 an das Netzelement 532,
vom Netzelement 532 an den Sendebus 502 des Datenbusses 50 der Betriebsstelle 5,
vom Sendebus 502 an den Sekundärmaster 51,
vom Sekundärmaster 51 an den Empfangsbus 501 des Datenbusses 50 der Betriebsstelle 5,
vom Empfangsbus 501 an alle Netzelemente 531 ... 53n der Betriebsstelle 5,
von allen Netzelementen 531... 53n der Betriebsstelle 5 an alle dazugehörigen Übertragungskanäle 641; 652 ... 65n ausgenommen den Übertragungskanal 652 von Netzelement 532,
von Netzelement 531 über den Übertragungskanal 641 an Netzelement 431,
vom Netzelement 431 an den Sendebus 402 des Datenbusses 40 der Betriebsstelle 4,
vom Sendebus 402 an den Primärmaster 41,
vom Primärmaster 41 mit besonderer Jobkennung an den Empfangsbus 401,
vom Empfangsbus 401 an alle Netzelemente 431 ... 43n der Betriebsstelle 4,
von allen Netzelementen 431 ... 43n der Betriebsstelle 4 an alle dazugehörigen Übertragungskanäle 641 ... 64n,
z..B. vom Netzelement 431 über den Übertragungskanal 641 an das Netzelement 531 und
weiter wie beim Aufruf zu allen Betriebsstellen.

In jeder Betriebsstelle 4, 5 ist eine Prozessoreinheit mit Spiegelungsfunktion vorgesehen. In der Betriebsstelle 4 ist dies der Primärmaster 41, in der Betriebsstelle 5 der Sekundärmaster 51. Die Prozessoreinheiten mit Spiegelungsfunktion, die ggf. ein Pseudomaster sein können, sind jeweils wie ein Master an den Datenbus der betreffenden Betriebsstelle angeschlossen.

Die Spiegelungsfunktion ermöglicht ohne zusätzliche Schaltmittel wie Gabeln oder Koppler die Weiterleitung der Telegramme von einem Netzelement an alle übrigen Netzelemente bei voller Duplexfähigkeit durch Trennung von Empfangs- und Sendewegen. Die Spiegelungsfunktion wird durch die als Sekundärmaster ausgebildete oder betriebene Prozessoreinheit oder, falls eine Betriebsstelle keinen Sekundärmaster zur lokalen Überwachung aufweist, von einer als Pseudomaster angeschlossenen und betriebenen Prozessoreinheit wahrgenommen. Z.B. gibt der Sekundärmaster 51 empfangene Aufruftelegramme an den Empfangsbus 501 des Datenbusses 50 weiter.

Die Prozessoreinheiten 421 ... 42n, 521 ... 52n haben eine Filterfunktion. Dabei ermöglicht das Erkennen eines von einer Prozessoreinheit 421 ... 42n, 521 ... 52n empfangenen Telegramms als eines, das von ihm selbst ausgesendet wurde und die folgende Unterdrückung der Aussendung über seinen Übertragungskanal 641 ... 64n; 652 ... 65n ohne zusätzliche Schaltmittel wie Frequenzumsetzer oder Filter eine unidirektionale Ausbreitung eines Telegramms im Kommunikationsnetz. Z.B. gibt das Netzelement 532 ein Antworttelegramm, das von ihm bereits über den Übertragungskanal 652 empfangen wurde, nach einem Empfang vom Sekundärmaster 51 nicht an den Übertragungskanal 652 zurück. Außerdem sendet der Primärmaster 41 ein Aufruftelegramm, das er aufgrund der Spiegelungsfunktion des Sekundärmasters 51 empfing, nicht ein zweitesmal aus.

Im Hinblick auf die Filterfunktion speichern die Prozessoreinheiten jeweils eine vorgegebene Zahl von Telegrammen, insbesondere jeweils die letzten drei Telegramme. Das gespeicherte Telegramm bzw. die gespeicherten Telegramme werden zweckmäßigerweise durch neu eintreffende Telegramme zyklisch überschrieben.

Der Primärmaster 41 ist mit einer Echofunktion versehen. Dabei werden vom Primärmaster empfangene Antworttelegramme mit einer Jobkennung versehen und ausgesendet. Die Filterfunktion der Prozessoreinheiten wird durch die besondere Jobkennung für Telegramme, die mit einer Jobkennung versehen sind, unterdrückt. Die besondere Jobkennung bewirkt, daß sich vom Primärmaster als Echo ausgesandte Antworttelegramme jeweils von dem empfangenen Antworttelegramm unterscheiden. Insbesondere kann eine in der Telegrammstruktur vorgesehene Jobkennung für alle Antworttelegramme als gleiche Zahl gewählt und diese Zahl beim Aussenden aufgrund der Echofunktion jeweils um 1 erhöht werden. Auf diese Weise wird das vom Primärmaster empfangene Antworttelegramm vor der Aussendung aufgrund der Echofunktion so modifiziert, daß es von den Prozessoreinheiten trotz deren Filterfunktion jeweils weitergereicht wird. Anstelle einer im Protokoll vorgesehenen und nicht anderweitig benötigten Jobkennung können die als Echo ausgesandten Antworttelegramme ggf. auf andere Art modifiziert werden.

Diese Maßnahmen ermöglichen die Wiederausbreitung der Antworttelegramme im Kommunikationsnetz. Durch den Empfang des vom Primärmaster 41 als Echo ausgesendeten Antworttelegramms durch die fernen Sekundärmaster 51, ... können diese den vollständigen Datenverkehr überwachen und ihren eigenen Alarm- und Meldungsspeicher mit dem des Primärmasters 41 auf identischem Inhalt halten.

Jeder Prozessoreinheit, d.h. den Prozessoreinheiten der Netzelemente und den Mastern wird bei Inbetriebnahme der Überwachungsvorrichtung durch Codierung eine eigene Adresse zugewiesen. Diese Codierung kann durch Hardware oder Software vorgenommen werden. Der erste Teil der Adresse ist für die Prozessoreinheiten einer Betriebsstelle jeweils identisch und stellt somit die Adresse der betreffenden Betriebsstelle dar. Der zweite Teil der Adresse bezeichnet die jeweilige Prozessoreinheit innerhalb einer Betriebsstelle. Jedes Aufruftelegramm kann so von der jeweiligen Prozessoreinheit als ein nur sie betreffendes erkannt werden.

Die spezielle Adressierung der Prozessoreinheiten ermöglicht eine automatische, durch Software gestützte Erfassung der Struktur des Kommunikationsnetzes. Der Primärmaster sendet dabei ein mit einer besonderen Kennung versehenes Aufruftelegramm an jede in seiner Aufrufliste registrierte Prozessoreinheit, und zwar an die Prozessoreinheiten der Netzelemente und jeden Sekundärmaster.

Diese Kennung veranlaßt jede ein solches Telegramm empfangende Prozessoreinheit, dieses Telegramm mit beiden Teilen ihrer eigenen Adresse zu ergänzen und weiterzugeben, so daß das an der adressierten Prozessoreinheit eintreffende Telegramm gekettet die Adressen aller durchlaufenen Betriebsstellen und Prozessoreinheiten enthält. Dieses nun als Antworttelegramm ausgesendete und vom Master empfangene Telegramm ermöglicht es dem Master, die Folge der Kaskadierung von Betriebsstellen und die Zuordnung der Prozessoreinheiten zu diesen Betriebsstellen und somit die Gesamtstruktur des Kommunikationsnetzes zu erfassen und am Datensichtgerät darzustellen.

Aufgrund der vorgesehenen Netzstruktur und Telegrammführung erreichen alle Aufruftelegramme des Primärmasters 41, ebenso wie die Antworttelegramme aller Prozessoreinheiten jede Betriebsstelle 4, 5 etc. des Kommunikationsnetzes. In den weiteren Betriebsstellen 5 etc. werden die Aufruf- und Antworttelegramme von Sekundärmastern gleicher Bauart mitgehört. Die Sekundärmaster 51 etc. sind daher in der Lage, Aufruf- und Informationslisten abzuspeichern, die mit den vom Primärmaster abgespeicherten Listen übereinstimmen.

Aufruf- und Befehlstelegramme gehen stets nur vom Primärmaster 41 aus, da es andernfalls zur Kollision von Datentelegrammen auf den Bussen 40, 50 der Betriebsstellen 4, 5 käme.

Alle mit Adressen versehenen Netzelemente werden vom Primärmaster durch Aufruf- oder Steuerungstelegramme angesprochen. Das jeweils angesprochene Netzelement antwortet in einem vorgegebenen Zeitraum mit der gewünschten Information oder Bestätigung des Befehls.

Jedes Netzelement verfügt über einen Anschluß für einen Übertragungskanal, der dieses Netzelement mit einem Netzelement in einer lokal abgesetzten Betriebsstelle verbindet. Jedes über den Datenbus eintreffende Abfrage- oder Befehlstelegramm wird vom Netzelement über den angeschlossenen Übertragungskanal weitergegeben. Die über den Übertragungskanal bei einem Netzelement einer anderen Betriebsstelle eintreffenden Telegramme werden von diesen an den Datenbus weitergegeben, so daß über diesen alle an ihn angeschlossenen übrigen Netzelemente erreicht werden. Auf diese Weise erreicht jedes Telegramm jedes Netzelement. Nur das adressierte Netzelement antwortet mit der gewünschten Information, die auf gleichem Wege über das Gesamtnetz verbreitet wird.

Bei Bedarf können anstatt von der Betriebsstelle 4 von anderen Betriebsstellen aus Aufrufe oder Befehle an Prozessoreinheiten abgegeben werden. Zu diesem Zweck kann die Primärmasterfunktion wahlweise von jeder der Betriebsstellen 4, 5 etc. aus wahrgenommen werden. Ein gegenseitiger Informationsaustausch zwischen den Mastern 41, 51, ... stellt dabei sicher, daß der ursprüngliche Primärmaster keine Aufrufe aussendet, solange ein anderer Master die Primärmasterfunktion hat.

Die Master sind wie die Prozessoreinheiten der Netzelemente ebenso mit Adressen versehen und in der Aufrufliste abgespeichert. Sie werden daher ebenfalls zyklisch aufgerufen. Neben Eigenstörungen kann von den Sekundärmastern im Antworttelegramm auch eine Anfrage zur Übernahme der Primärmaster-Funktion zum Primärmaster übertragen werden.

Empfängt ein Primärmaster eine Anfrage zur Übertragung der Primärmaster-Funktion, so übergibt er im Normalfall, d.h. falls keine Sperre durch den dortigen Betriebsdienst veranlaßt ist, im nächsten Telegramm seine Primärmaster-Funktion an den anfragenden Sekundär-Master und geht selbst sofort in den Sekundärmaster-Betrieb über, indem er nun die vom Sekundärmaster in Primärmasterfunkton fortgeführten zyklischen Aufruf- und Antworttelegramme mithört und abspeichert.

Während dieser Zeit übernimmt der Primärmaster Sekundärmasterfunktionen und bleibt damit auf dem aktuellem Informationsstand.

Ein Zurückwechseln in die ursprüngliche Funktion als Primärmaster ist durch Befehlstelegramme vom neuen Primärmaster oder durch Anforderung vom alten Primärmaster bei turnusgemäßem Aufruf seiner Adresse durch den neuen Primärmaster möglich. Der neue Primärmaster geht nach Empfang des Antworttelegramms wieder in die Sekundärmaster-Funktion über.

Zweckmäßigerweise wird für den Fall, daß der alte Primärmaster innerhalb einer vorgegebenen Zeit weder Aufrufnoch Antworttelegramme empfängt, eine automatische Wiederaufnahme der Primärmasterfunktion vorgesehen. Für den Anwender oder Betriebsdienst ist somit das gesamte Nachrichtenübertragungsnetz von jeder Betriebsstelle aus überwach- und steuerbar.

Die Überwachungsvorrichtung dient zur zentralen Überwachung und Steuerung eines Übertragungsnetzes, bestehend aus einer Vielzahl von örtlich getrennten Betriebsstellen, die mit Übertragungsgeräten als Netzelementen bestückt sind. Die Stationen der Überwachungsvorrichtung sind Prozessoreinheiten, die einen oder mehrere Prozessoren enthalten können. Die Prozessoreinheiten sind durch Übertragungskanäle, die von den Übertragungsgeräten zur Verfügung gestellt werden, miteinander in Linien-, Stern- oder Baumstruktur verbunden. Als Übertragungsgeräte können insbesonder Leitungsendgeräte dienen.

Eine Steuerung und Überwachung ist wahlweise von jeder Betriebsstelle aus möglich. Alle Informationen von einem Übertragungsgerät und alle Befehle des Primärmasters werden im gesamten Netz ausgebreitet und von lokalen Einheiten, den Mastern der In-Betrieb-Überwachungsvorrichtung, abgespeichert. Bei Bedarf können diese Informationen an Alarmierungsseinrichtungen und Personalcomputer weitergegeben werden.

Auch ein Primär- oder Sekundärmaster kann eine Prozessoreinheit eines Netzelementes sein.

Die Betriebsstellen, die jeweils einen eigenen Primär-, Sekundär- oder Pseudomaster haben, befinden sich an verschiedenen Orten. Gegebenenfalls können jedoch zwei oder mehr derartige Betriebsstellen an ein und denselben Ort, z.B. in ein und demselben Gebäude angeordnet sein. Die Vernetzung der Betriebsstellen kann so vorgenommen werden, daß eine Baumstruktur entsteht. Die Anzahl der Verzweigungen in einer Betriebsstelle kann zwei oder mehr betragen. Zwischen den Zweigen in der Baumstruktur dürfen keine Querverbindungen hergestellt werden.

Jeder Slave ist einem Übertragungsgerät zugeordnet und ermittelt die Qualitätsparameter und Fehlerzustände des Gerätes. Im Betrieb fragt der Primärmaster zyklisch alle Slaves nach dem Zustand des betreffenden Übertragungsgerätes ab. Nach einer Abfrage durch den Primärmaster werden die Daten in einem Antworttelegramm zurückgesendet.

Eine an den Sekundärmaster angeschlossene Signalisierungseinrichtung, insbesondere ein PC, kann Alarme aus dem System anzeigen und gegebenenfalls protokollieren. Steuerungsfunktionen können nur von einem Master mit Primärmaster-Funktion übernommen werden. Die Primärmaster-Funktion kann jedoch von jedem Sekundärmaster angefordert werden. Das System läßt sich dadurch von verschiedenen Bedienstationen, insbesondere PC steuern.

Die Echofunktion des Primärmasters gewährleistet, daß auch die Sekundärmaster die an den Primärmaster adressierten Antworttelegramme empfangen können. Da ein vom Primärmaster als Echo ausgesandtes Antworttelegramm auch die Prozessoreinheit erreicht, von der das Antworttelegramm ursprünglich stammt, kann die Echofunktion in vorteilhafter Weise zugleich zur Quittierung des Empfangs von Antworttelegrammen dienen. Empfängt eine Prozessoreinheit ihr eigenes, mit der Jobkennung oder dergleichen versehenes Antworttelegramm, so hat sie die Bestätigung, daß ihr Antworttelegramm vom Primärmaster richtig empfangen wurde. Aufgrund dieser Bestätigung kann sie insbesondere einen Speicher zurücksetzen, in dem Kurzzeitmeldungen bis zur Übermittlung an den Primärmaster gespeichert werden sollten.

Auch bei einer derartigen Signalübertragungseinrichtung sind die zu den Stationen gehörigen Antwortwartezeiten im wesentlichen von der Zahl der Kaskadierungen abhängig, die ein Aufruftelegramm auf seinem Weg von der Zentralstation zur jeweiligen Station durchläuft.

Die Anzahl der Kaskadierungen, die ein Telegramm von der Zentralstation bis zur jeweiligen Station durchläuft, wird zweckmäßigerweise mit Hilfe einer Diagnosefunktion erfaßt und abgespeichert. Dabei werden in einem Testzyklus die stationsindividuellen Zahlen der Kaskadierungen festgestellt, in dem die Aufruftelegramme mit einer Kennung versehen werden. Die Stationen ergänzen mit einer Kennung versehene Telegramme vor der Weitergabe mit der eigenen Adresse. Die Antworttelegramme der Stationen enthalten jeweils die empfangene Folge von Adressen, so daß sich die zur Station gehörende Zahl von Kaskadierungen aus der Folge der Adressen ermitteln läßt.

Die Vorrichtung zur Ablaufsteuerung ist so in der Lage, automatisch die Netzstruktur aufzunehmen.

Die Sekundärmaster legen jeweils in ihrem Adressenspeicher eine eigene Aufrufliste an. In dieser Aufrufliste sind zu den Adressen der vom Primärmaster aufgerufenen Prozessoreinheiten jeweils die Zeiten gespeichert, die zwischen dem Eintreffen des Aufruftelegrammes und dem Eintreffen des dazugehörigen Antworttelegrammes vergehen. Trifft bis zum Ablauf dieser als adressenindividuelle Speicherwartezeiten kein Antworttelegramm ein, so wird zu der betreffenden Adresse das Kriterium "Prozessoreinheit antwortet nicht" im Adressenspeicher gespeichert.

Übernimmt ein Sekundärmaster die Primärmasterfunktion, so benötigt er als solcher die adressenindividuellen Antwortwartezeiten. Diese werden in der in Verbindung mit der Primärmasterfunktion beschriebenen Weise ermittelt und gespeichert. Geht der neue Primärmaster dann wieder in seinen alten Zustand als Sekundärmaster über, so kann er auf die noch vorhandenen Speicherwartezeiten zurückgreifen.

Auf die beschriebene Art läßt sich in vorteilhafter Weise eine automatische Optimierung der Antwortwartezeit erzielen.

## Patentansprüche

1. Verfahren zum Aufruf von Stationen durch eine Zentralstation anhand des Inhalts eines Adressenspeichers (110), in Signalübertragungseinrichtungen, bei denen wenigstens eine Zentralstation (11,41) und durch die Zentralstation (11,41) einzeln aufrufbare Stationen (211 ... 24n) an ein gemeinsame Signalübertragungsnetz (10, 20, 30) anschließbar sind und die Stationen (211 ... 24n) durch die Zentralstation (11,41) derart abfragbar sind, daß als Abfrageergebnis die Adressen der in der Signalübertragungseinrichtung vorhandenen Stationen (211 ... 24n) in den Adressenspeicher (110) einschreibbar sind und in Abfragezyklen durch die Zentralstation (11,41) die im Adressenspeicher (110) gespeicherten Adressen zur Abfrage der Stationen (211 ... 24n) herangezogen werden,
**dadurch gekennzeichnet,**
daß zu den Adressen der Stationen (211 ... 24n) individuelle Antwortwartezeiten gespeichert werden und daß je Aufrufzyklus auf das erste Aufruftelegramm folgende weitere Aufruftelegramme jeweils bei Nichtantworten der zuvor aufgerufenen Station nach Ablauf der zur Adresse dieser Station gespeicherten Antwortwartezeit ausgesendet werden.

2. Verfahren nach Anspruch 1,
**dadurch gekennzeichnet,**
daß die Zentralstation (11,41) in einem Prüfzyklus die Stationen (211 ... 24n) einzeln aufruft, jeweils die in der Signalübertragungseinrichtung maximal vorkommende Antwortzeit bis zum Aussenden des nächsten Aufruftelegrammes abwartet und jeweils die Zeit zwischen Aussenden des Aufruftelegramms und Empfangen des Antworttelegramms gemessen und als Antwortwartezeit zur Adresse im Adressenspeicher gespeichert wird und daß bei darauffolgenden Aufrufzyklen auf das erste Aufruftelegramm folgende weitere Aufruftelegramme jeweils bei Nichtantworten der zuvor aufgerufenen Station nach Ablauf der zur Adresse dieser Station gespeicherten Antwortwartezeit ausgesendet werden.

3. Verfahren nach Anspruch 1,
**dadurch gekennzeichnet,**
daß zu jeder Station (211 ... 24n) die Zahl der Kaskadierungen gespeichert wird, die ein Aufruftelegramm auf seinem Weg von der Zentralstation (11,41) zur jeweiligen Station durchläuft und daß als Antwortwartezeit das Produkt aus einer vorgegebenen Mindestzeit und der Anzahl der Kaskadierungen gespeichert wird.

4. Verfahren nach Anspruch 3,
**dadurch gekennzeichnet,**
daß die stationsindividuellen Zahlen der Kaskadierungen in einem Testzyklus festgestellt werden, in dem die Aufruftelegramme mit einer Kennung versehen werden, und daß die Stationen mit der Kennung versehene Telegramme vor der Weitergabe mit der eigenen Adresse ergänzen, und daß die Antworttelegramme der Stationen jeweils die empfangene Folge von Adressen enthalten, und daß die zur Station gehörende Zahl von Kaskadierungen aus der Folge der Adressen ermittelt wird.

5. Verfahren nach einem der Ansprüche 1 bis 4,
**dadurch gekennzeichnet,**
daß in der Signalübertragungsvorrichtung mehrere Zentralstationen vorgesehen sind, von denen eine als Primärmaster die Aufruftelegramme aussendet und die anderen als Sekundärmaster empfangene Telegramme auswerten, und daß in den Sekundärmastern zu den Adressen der Stationen individuelle Speicherwartezeiten gespeichert werden, nach deren Ablauf zur betreffenden Stationen ein Fehlerkriterium gespeichert wird.

6. Anordnung zur Durchführung des Verfahrens nach einem der Ansprüche 1 bis 5, wobei wenigstens eine Zentralstation (11,41) und durch die Zentralstation (11,41) einzeln aufrufbare Stationen (211 ... 24n) an ein gemeinsames signalübertragungsnetz(10, 20, 30) anschließbar sind, wobei die Zentralstation (11,41) eine Vorrichtung zur Ablaufsteuerung und einen Adressenspeicher (110) enthält und die Stationen durch die Vorrichtung zur Ablaufsteuerung derart abfragbar sind, daß als Abfrageergebnis die Adressen der in der Signalübertragungseinrichtung vorhandenen Stationen (211 ... 24n) in den Adressenspeicher (110) einschreibbar sind und in Abfragezyklen durch die Zentralstation (11,41) die im Adressenspeicher (110) gespeicherten Adressen zur Abfrage der Stationen (211 ... 24n) herangezogen werden,
**dadurch gekennzeichnet,**
daß der Adressenspeicher (110) einen Speicherbereich zur adressenindividuellen Speicherung von Antwortwartezeiten aufweist und daß je Aufrufzyklus auf das erste Aufruftelegramm folgende weitere Aufruftelegramme jeweils bei Nichtantworten der zuvor aufgerufenen Station nach Ablauf im Adressenspeicher der zur Adresse dieser Station gespeicherten Antwortwartezeit aussendbar sind.
